# EUROPEAN PATENT APPLICATION

(11) **EP 0 691 373 A1**
(43) Date of publication of application: **10.01.1996**
(21) Application number: 95304639.8
(22) Date of filing: 03.07.1995
(51) Int. Cl.: C08K 9/06, C08L 83/04

(54) **Method for preparing organopolysiloxane bases and compositions therefrom**

(30) Priority: 08.07.1994 US 272502
(71) Applicant: DOW CORNING CORPORATION, Midland, Michigan 48686-0994 (US)
(72) Inventor: Conway, Lori Jean, Midland, Michigan (US); Gray, Thomas Edward, Midland, Michigan (US); Griffith, Phillip Joseph, Midland, Michigan (US); Schulz, William James, Jr., Midland, Michigan (US)
(74) Representative: Bullows, Michael

(57) **Abstract**

A method for preparing organopolysiloxane bases characterized by high levels of fillers. We have found that by mixing the components of the base at a temperature of 60°C. or below for a time period sufficient to effect essentially a homogeneous blend, a base composition is formed which can be further blended with a platinum group metal-containing catalyst, an organohydrogensiloxane and, optionally, an inhibitor to form a curable liquid silicone rubber (LSR) composition. The curable LSR composition has improved flow characteristics and shelf life when compared to similar materials where the base is prepared at temperatures above 60°C. The improved flow characteristics allow larger quantities of fillers to be incorporated into our curable LSR composition while still maintaining acceptable flow characteristics. Silicone elastomers prepared from these compositions have improved swell and degradation resistance to oils, lower compression set values and improved tear, elongation and tensile values without requiring post cure procedures.

## Description

The platinum catalyzed crosslinking of olefin containing polysiloxanes with other polysiloxanes containing hydrogen-bonded silicon to form silicone elastomers is well known in the art. It is also known that the physical properties of these elastomers are modified by the addition of reinforcing fillers, such as silica, and extending fillers such as ground quartz. A common problem associated with the incorporation of such fillers into liquid polysiloxane compositions is a significant increase in viscosity. This increase often presents a dilemma to formulators and fabricators making and using such materials. On one hand higher levels of fillers provide improved physical characteristics such as physical strength and oil resistance, but on the other hand the incorporation of higher levels of filler can result in a material having such a high viscosity that it cannot be used in processes such as low and high pressure injecting molding.

Many procedures are described in the art for the treatment of such fillers to improve or modify their effect on the physical properties of silicone elastomers. For example, U.S. Patents 4,116,919 and 4,360,610 suggest treating such fillers, but do not appear to consider the increase in viscosity of the liquid polysiloxane mixtures, the effect on the process of composition viscosity after filler addition or the impact on shelf life of the composition.

U.S. Patent 4,013,611 suggests that the order and method of addition of a filler with polysiloxane components can influence the effect of the filler on the resulting filled polysiloxane composition. This art also discloses that compositions containing 10 to 50 weight percent filler are pourable or are capable of being brushed onto a substrate.

We have found that a vinyldiorganosiloxy end-terminated polysiloxane fluid, having a viscosity within a range of 30 mPa·s to 1,000 mPa·s, can be mixed at a temperature of 60°C. or below with a disilazane, silica reinforcing filler, ground quartz, and water to form a base composition characterized by having a lower viscosity and an improved shelf life, when compared to similar compositions prepared at temperatures above 60°C.

The present invention provides a method for preparing an organopolysiloxane base, which when blended with suitable curing components forms a composition having improved flow characteristics and shelf life. The invention also relates to novel organopolysiloxanes bases prepared by this method, to LSR compositions containing our organopolysiloxane base and suitable curing components, and to the cured silicone rubber compositions prepared from our LSR compositions.

The method for preparing our organopolysiloxane base, known as component (A), comprises forming a mixture comprising:
(i) 100 parts by weight of a vinyldiorganosiloxy end-terminated polysiloxane fluid having a viscosity within a range of 30 mPa·s to 1,000 mPa·s at 25°C.,
(ii) 80 parts to 120 parts by weight of ground quartz having an average particle size within a range of 1 to 20 micrometers,
(iii) up to 50 parts by weight of silica,
(iv) 5 to 20 parts by weight of a disilazane, and
(v) 1 to 10 parts of water;

where components (i) through (v) are mixed at a temperature of 60°C. or below for a period of time sufficient to effect essentially a homogeneous blend.

Optionally, the organopolysiloxane base (A) can further comprise: (vi) 0.05 parts to 5 parts by weight of a hydroxydiorganosiloxy end-terminated vinylorganosiloxane described by formula HO{(SiR₂O)ₓ(SiRViO)_{y}}H where each R is an independently selected non-alkenyl monovalent hydrocarbon radical comprising one to seven carbon atoms, Vi is vinyl, x+y=6 to 20 and y=≧2.

The organopolysiloxane base can be further mixed with (B) an organohydrogensiloxane crosslinker containing an average of at least two silicon-bonded hydrogen atoms per molecule, the amounts of components (B) and (A)(i) being sufficient to provide a ratio of the number of silicon-bonded hydrogen atoms to the number of vinyl substituents of component (A)(i) within a range of 1:10 to 10:1, and (C) a platinum group metal-containing catalyst, the amount of catalyst being sufficient to accelerate a curing reaction between the vinyl substituents of component (A)(i) and the silicon-bonded hydrogen atoms of component (B).

The mixture comprising the organopolysiloxane base (A), organohydrogensiloxane crosslinker (B), and platinum group metal-containing catalyst (C) can further comprise an inhibitor (D) that retards the room temperature curing of the mixture.

This latter mixture of (A) - (D) can be cured at an appropriate temperature to form a silicone elastomer.

The mixing of components comprising our organopolysiloxane base can be effected in any standard mixer for creating such mixture, providing the temperature of components within the reactor are kept at a temperature of 60°C. or below. The mixer can be, for example, a water-cooled Baker Perkins™ mixer.

The vinyldiorganosiloxy end-terminated polysiloxane fluid (A)(i) can have a viscosity within a range of 30 mPa·s to 1,000 mPa·s at 25°C. (30 to 1,000 centipoise). The vinyldiorganosiloxy end-terminated polysiloxane fluid can be monodispersed, polydispersed or a mixture of monodispersed fluids. Preferred is when the vinyldiorganosiloxy end-terminated polysiloxane fluid has a viscosity within a range of 40 mPa·s to 500 mPa·s at 25°C. In addition to vinyl substituents, the polysiloxane fluid (A)(i) also comprises organic substituents bonded to silicon where each organic substituent is an independently selected monovalent hydrocarbon radical comprising one to seven carbon atoms, with the proviso that at least 50 percent of the organic substituents are methyl.

The organic substituents of polysiloxane fluid (A)(i) are alkyls, such as methyl, ethyl, propyl, tertiary butyl, and hexyl; cycloalkyls such as cyclohexyl; aryls such as phenyl and tolyl; and halogen substituted alkyls such as 3,3,3-trifluoropropyl and perfluoropropyl. Preferred is when these organic substituents are methyl.

The organopolysiloxane base comprises 80 to 120 parts by weight of ground quartz having an average particle size within a range of 1 to 20 micrometers. Preferred is when the ground quartz comprises 100 parts to 110 parts by weight, per 100 parts by weight, of the vinyldiorganosiloxy end-terminated polysiloxane fluid (A)(i). Preferred is when the ground quartz has an average particle size within a range of 1 to 10 micrometers. More preferred is when the ground quartz has an average particle size of five micrometers.

The organopolysiloxane base comprises up to 50 parts of silica reinforcing filler per 100 parts by weight of the vinyldiorganosiloxy end-terminated polysiloxane fluid (A)(i). Preferred is when the organopolysiloxane base comprises 30 to 40 parts by weight of silica reinforcing filler on the same basis. Both precipitated and fumed silica can be used; however, fumed silica is preferred. It is preferred that the silica reinforcing filler have a surface area greater than 50 m/g. The preferred silica filler is a fumed silica have a surface area within a range of 300 to 500 m/g.

Our organopolysiloxane base also comprises 5 to 20 parts by weight of a disilazane, per 100 weight parts of the vinyldiorganosiloxy end-terminated polysiloxane fluid (A)(i). The disilazane is of the formula (R¹₃Si)₂NH, where R¹ is selected from R as described above or alkenyls comprising 1 to 7 carbon atoms. Preferred is when each R¹ is independently selected from methyl or vinyl. The disilazanes are prepared by the procedures of U.S. Patent 3,481,964, by combining the corresponding halosilane with ammonia. The disilazane can also comprise a mixture of disilazanes. Preferred is when 7 to 15 parts by weight of the disilazane is added on the same basis as described above. Even more preferred is when 12 parts by weight of hexamethyldisilazane is added on the same basis as described above.

Preparation of our organopolysiloxane base requires the presence of 1 to 10 parts by weight water, per 100 parts by weight of the vinyldiorganosiloxy end-terminated polysiloxane fluid (A)(i). Preferred is the presence of 2 to 7 parts by weight of water, on the same basis. Those skilled in the art will recognize that water associated with the ground quartz (A)(ii) and silica (A)(iii) can provide at least a portion of the necessary water requirement to the process. Additional water, such as deionized or distilled water, can be added to the process as required.

Optionally, organopolysiloxane base (A) can further comprise 0.05 to 10 parts by weight of hydroxydiorganosiloxy end-terminated vinylorganosiloxane (A)(vi) described by formula HO{(SiR₂O)ₓ(SiRViO)_{y}}H, where Vi is vinyl, each R is an independently selected non-alkenyl monovalent hydrocarbon radical comprising 1 to 7 carbon atoms, x+y=6 to 20, and y≧2. Preferred is when the hydroxydiorganosiloxy end-terminated vinylorganosiloxane comprises 1 to 5 parts by weight per 100 parts by weight of the vinyldiorganosiloxy end-terminated polysiloxane fluid (A)(i). The substituent R is, for example, alkyls such as methyl, ethyl, propyl, tertiary butyl and hexyl; cycloalkyls such as cyclohexyl; aryls such as phenyl or tolyl; and halogen substituted alkyls such as 3,3,3-trifluoropropyl or perfluoropropyl. Preferred is when the substituent R is methyl.

The organopolysiloxane base comprising the above described components (A)(i) through (A)(v), and optionally (A)(vi), is mixed at a temperature of 60°C. or below for a period of time sufficient to effect essentially a homogeneous blend. By "essentially homogeneous blend", it is meant until the mixture appears uniform by unaided visual inspection. We have found that, if during this mixing process the temperature of the mixture comprising components (A)(i) through (A)(v), and optionally (A)(vi), is kept below 60°C., the resulting base will have better flow characteristics (i.e. lower viscosity) and improved shelf life, when compared to a similar base with comparable filler levels prepared at higher temperatures. Therefore, higher levels of filler are incorporated into the base while maintaining flow characteristics typical of those associated with LSR compositions. Organopolysiloxane bases prepared by our process typically have viscosities within the range of 1,000 Pa·s at 10 sec⁻¹ (0.067 x 10⁶ centistoke) to 25,000 Pa·s at 0.9 sec⁻¹ (1.68 x 10⁶ centistoke).

The specific apparatus for effecting mixing is not critical to the present process and can be any mixing apparatus where the contents of the mixture are kept at a temperature of 60°C. or below during the mixing process. The mixing apparatus can be, for example, a water cooled sigma blade mixer or a water cooled bread dough mixer.

In a preferred embodiment, the mixture comprising components (A)(i) through (A)(v), and optionally (A)(vi), is prepared at a temperature within a range of 50°C. to 60°C. by incremental addition of certain of components (A)(i) through (A)(v), and optionally (A)(vi), to the mixing apparatus. For example, 50 to 75 weight percent of component (A)(i) can be added to the mixing apparatus, 50 weight percent of component (A)(iv), and all of components (A)(v) and (A)(vi) to form a liquid mixture. At least 75 weight percent of the ground quartz (A)(ii) can be added to this liquid mixture along with one-third of the silica (A)(iii). The components are mixed for a period of time sufficient to ensure essentially a homogeneous blend. The remaining components, that is the silica (A)(iii) and disilazane (A)(iv), are added in two more approximately equal increments with additional mixing in between each addition. This mixture is then heated at a temperature within a range of 140°C. to 160°C. under vacuum until a characteristic ammonia odor is undetectable. The mixture is cooled to a temperature within a range of 50°C. to 60°C. and the remainder of components (A)(i) and (A)(ii) is added to form the organopolysiloxane base material of the present invention.

A preferred sequence of addition of components to form organopolysiloxane base (A) is as follows: a mixture comprising (A)(i), (A)(v), and optionally A(vi) is formed; (A)(iv) is added to the mixture and blended in; (A)(ii) is then added to the mixture and blended in; finally, (A)(iii) is added to the mixture and blended in and the resulting mixture is heated as described above.

The organopolysiloxane base material of this invention can be further mixed with organohydrogensiloxane crosslinker (B), platinum group metal-containing catalyst (C) and, optionally, inhibitor (D) to form a curable LSR composition.

The organohydrogensiloxane crosslinker (B) contains an average of at least two silicon-bonded hydrogen atoms per molecule and no more than one silicon-bonded hydrogen atom per silicon atom. The remaining valences of the silicon atoms are satisfied by divalent oxygen atoms or by monovalent hydrocarbon radicals comprising 1 to 7 carbon atoms. The monovalent hydrocarbon radicals are alkyls such as methyl, ethyl, propyl, tertiary butyl, and hexyl; cycloalkyls such as cyclohexyl; aryls such as phenyl and tolyl; and halogen substituted alkyls such as 3,3,3-trifluoropropyl and perfluoropropyl. Preferred is when all of the monovalent hydrocarbon radicals are methyl. Examples of organohydrogensiloxanes which may be useful as crosslinkers in the present composition are described in U.S. Patent 3,989,668. The organohydrogensiloxane crosslinker (B) can be linear, cyclic or branched siloxane polymers or mixtures thereof.

The amount of (B) crosslinker useful in the present composition is that sufficient to provide a ratio where the amount of silicon-bonded hydrogen atoms of component (B) to the number of vinyl substituents of the vinyldiorganosiloxy end-terminated siloxane fluid (A)(i) is within a range of 1:10 to 10:1. Preferred is where the ratio of silicon-bonded hydrogen atoms of component (B) to vinyl substituents of component (A)(i) is within a range of 1:1 to 5:1. More preferred is where the ratio is within a range of 2:1 to 3:1.

The platinum group metal-containing catalyst can be any such catalyst which is known to catalyze the reaction of silicon-bonded hydrogen atoms with silicon-bonded vinyl groups. By "platinum group metal", it is meant ruthenium, rhodium, palladium, osmium, iridium, and platinum. A group of platinum group metal-containing catalysts particularly useful in our claimed compositions are the complexes prepared from chloroplatinic acid as described by U.S. Patent 3,419,593, which shows such complexes and their preparation. A preferred catalyst is a platinum-containing complex which is the reaction product of chloroplatinic acid and sym-divinyltetramethyldisiloxane. Other examples of useful platinum group metal-containing catalysts are U.S. Patent 3,989,668; U.S. Patent 5,036,117; U.S. Patent 3,159,601; U.S. Patent 3,220,972; U.S. Patent 3,296,291; U.S. Patent 3,516,946; U.S. Patent 3,814,730; and U.S. Patent 3,928,629 which teach useful platinum group metal-containing catalysts and methods for their preparation.

The amount of platinum group metal-containing catalyst that is used to effect curing of the present LSR composition is not narrowly limited as long as there is a sufficient amount to accelerate a reaction between the silicon-bonded hydrogen atoms of the organohydrogensiloxane crosslinker (B) and the vinyl radicals of the vinyldiorganosiloxy end-terminated polysiloxane fluid (A)(i).

The appropriate amount of the platinum group metal-containing catalyst will depend upon the particular catalyst used. In general as low as 0.001 part by weight of platinum group metal, for every one million parts (ppm) by weight of component (A)(i), may be useful. Preferably the amount of platinum group metal is at least 1.0 ppm, on the same basis. More preferred is 1.0 to 10,000 ppm of platinum group metal, on the same basis.

Our organopolysiloxane base containing crosslinker and catalyst will cure rapidly at room temperature. To hinder this curing process, an inhibitor (D) may be added to the composition. The inhibitor can be any of those materials known to inhibit the catalytic activity of a platinum group metal-containing catalyst. By "inhibitor", it is meant that a material retards the room temperature curing of the composition when incorporated in the composition at less than 10 weight percent of the composition, without preventing the elevated temperature curing of the composition.

Inhibitors for platinum group metal-containing catalyst are well known in the organosilicon art. A preferred class of inhibitors useful in our compositions are acetylenic alcohols described in U.S. Patent 3,445,420. Such acetylenic alcohols are exemplified by ethynylcyclohexanol and methylbutynol. Other examples of classes of inhibitors which may be useful in the present process are described in U.S. Patent 5,036,117.

The amount of inhibitor (D) useful in this composition is not known to be critical and can be any amount that will retard the catalyzed reaction of the platinum group metal-containing catalyst of silicon-bonded hydrogen atoms of the crosslinker (B) with the vinyl radicals of component (A)(i), while not preventing the reaction at elevated temperatures. The specific amount of inhibitor (D) will depend upon the particular inhibitor used, the concentration and type of catalyst, and the nature and amounts of component (A)(i) and organohydrogensiloxane crosslinker (B). Generally, it is preferred that at least one mole of inhibitor be present for each mole of platinum in the composition and that the inhibitor not exceed one weight percent of the composition.

Our curable LSR compositions can also contain other components such as mold release agents, pigments and thermal stabilizing additives.

These LSR compositions can also be formed into a two-part system which cures upon mixing and exposure to an appropriate temperature. For example, two equal portions of the organopolysiloxane base (A) can be formed, with one portion containing the platinum group metal-containing catalyst, and a second portion containing an organohydrogensiloxane crosslinker and optionally an inhibitor. Our compositions have improved shelf-life when compared to similar compositions in which the organopolysiloxane base was prepared at temperatures above 60°C.

Our LSR composition can also be cured to form a silicone elastomer. By "cured", it is meant that a reaction is effected between the vinyl substituents of component (A)(i) and the silicon-bonded hydrogen atoms of the organohydrogensiloxane crosslinker (B) to convert the LSR composition into a solid. The present composition has the characteristics of a liquid silicone rubber and is particularly useful in injection molding processes for forming shaped objects of silicone rubber. Cured silicone rubber forms prepared from the present composition will have good resistance to swelling and degradation in oils, lower compression set, and improved tear, elongation and tensile values. Furthermore, cured silicone rubber forms prepared from the present composition typically do not require post curing.

### Example 1

An organopolysiloxane base was prepared at a temperature below 60°C. and cured samples were prepared and tested for physical properties. The organopolysiloxane base was prepared in a Baker Perkins™ mixer. The final composition of this base is further described in Table 1.

The base was prepared in a 3.8 l (one-gallon) Baker Perkins™ mixer cooled with water to maintain the temperature of the base below 60°C. One-half of component (i), one-third of component (iv), and all of component (v) and (vi) were added to the mixer and mixed for ten minutes. Next, three-fourths of component (ii) was added to the mixer and mixing continued for an additional 15 minutes. Then, one-third of component (iii) was added to the mixer and mixing continued for an additional five minutes. One-third of each of components (iii) and (iv) was added to the mixer and mixing continued for an additional five minutes. The remaining one-third of each of components (iii) and (iv) were added to the mixer and mixing was continued for an additional 1.5 hours. The mixer was then heated to 150°C. and mixing continued for 2.5 hours, after which time the mixture was cooled to below 60°C. The remainders of components (i) and (ii), and all of component (vii), were added to the mixture and blended in, to form the base material.

Viscosity of the base material was determined by ASTM Standard D4287 and is reported in Table 2.

The base was divided into two equal parts designated as Part A and Part B. Into part A was mixed 0.43 weight percent of a platinum-containing complex (27 ppm platinum) which was the reaction product of chloroplatinic acid and sym-divinyltetramethyldisiloxane. Into Part B was mixed 0.07 weight percent of 1-ethynlcyclohexan-2-ol and 1.42 weight percent of a low molecular weight methylhydrogensiloxane having 1.05 weight percent of silicon-bonded hydrogen.

Equal amounts of Part A and Part B were combined on a water cooled three-roll mill. The blended material was transferred to a standard chase for preparing samples suitable for physical property determinations and cured at 177°C. for 5 minutes. The cured elastomer was then tested by standard test methods as referenced in Table 2.

Samples of the cured elastomer were also post cured at 204°C. for four hours and the physical properties tested. The test methods used and the results are provided in Table 3.

Samples of the cured elastomer were tested for oil resistance according to ASTM D741-79 using ASTM No. 1 oil. The physical properties of the elastomer after exposure to ASTM No. 1 oil for 70 hours at 150°C. are reported in Table 4.

Samples of the cured elastomer were tested for oil resistance according to Japanese Industrial Standard K6310-1975 using JIS No. 3 oil. The physical properties of the elastomer after exposure to JIS No. 3 oil for 70 hours at 150°C. are reported in Table 5.

**Table 1**

| | Parts | Component |
|---|---|---|
| (i) | 100 | vinyldimethylsiloxy end-terminated dimethylpolysiloxane (viscosity 49,500 mPa·s or centipoise) |
| (ii) | 104.2 | ground quartz (Minusil™, 2-15 micrometer, U.S. Silica, Millcreek, OK) |
| (iii) | 32.0 | silica (S-17, BET surface area of 400 M/g, Cabot Corporation, Tuscola, IL) |
| (iv) | 12.9 | hexamethyldisilazane |
| (v) | 4.1 | water |
| (vi) | 1.8 | hydroxydimethylsiloxy end-terminated vinylmethylsiloxane described by formula HO{(SiMe₂O)ₓ(SiMeViO)_{y}}H, where x/y=2 and x+y=8-10 |
| (vii) | 1.2 | low molecular weight hydroxydimethylsiloxy end-terminated dimethylpolysiloxane |

### Example 2

For comparison purposes, an organopolysiloxane base was prepared of the same composition and by the same procedure as described in Example 1 except the Baker Perkins™ mixer was not water cooled during preparation of the composition prior to the heating step. This allowed the temperature of the mixer to rise to 80°C. to 90°C. during the initial mixing. The viscosity of this base was determined by the method described in Example 1 and the results are reported in Table 2. The organopolysiloxane base was then used to form a cured silicone elastomer as described in Example 1; the elastomer was tested by standard test methods referenced in Table 2; and the results of this testing are reported in Table 2. The result of post curing and of contact with oils on the physical properties of the elastomer is reported in Tables 3, 4 and 5 by the methods described in Example 1.

### Example 3

For comparison purposes, an organopolysiloxane base was prepared of the same composition and by the same procedure as described in Example 1 except the Baker Perkins™ mixer was not water cooled during preparation of the composition prior to the heating step and component (ii), Minusil™, was not added until after the heating step. The viscosity of this base was determined by the method described in Example 1 and the results are reported in Table 2. The organopolysiloxane base was then used to form a cured silicone elastomer as described in Example 1, the elastomer was tested by standard test methods as referenced in Table 2, and the results of this testing are reported in Table 2. The result of post curing and of contact with oils on the physical properties of the elastomer is reported in Tables 3, 4 and 5, again as described in Example 1.

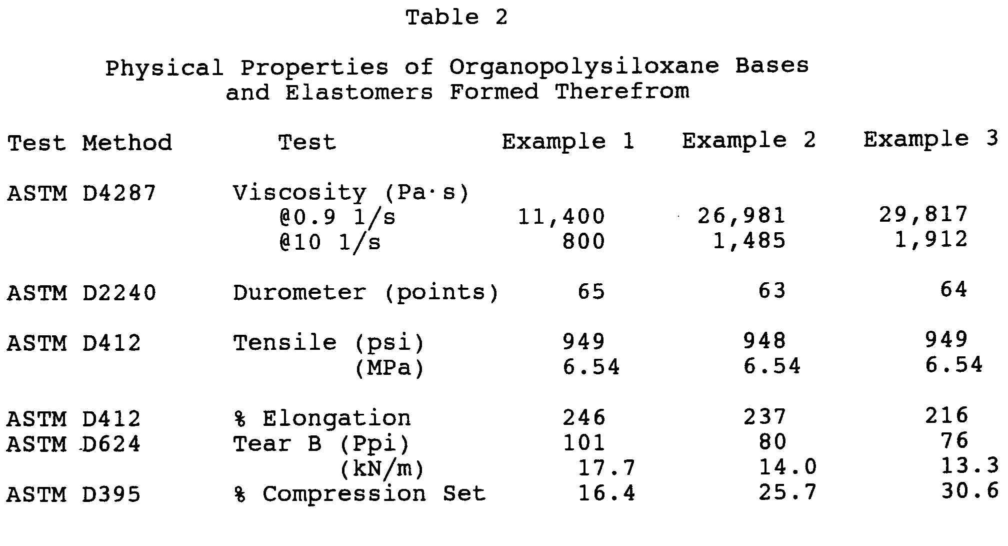

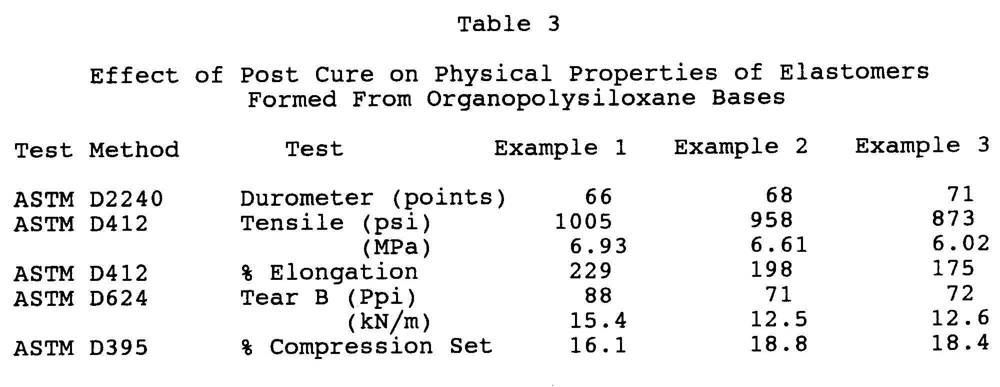

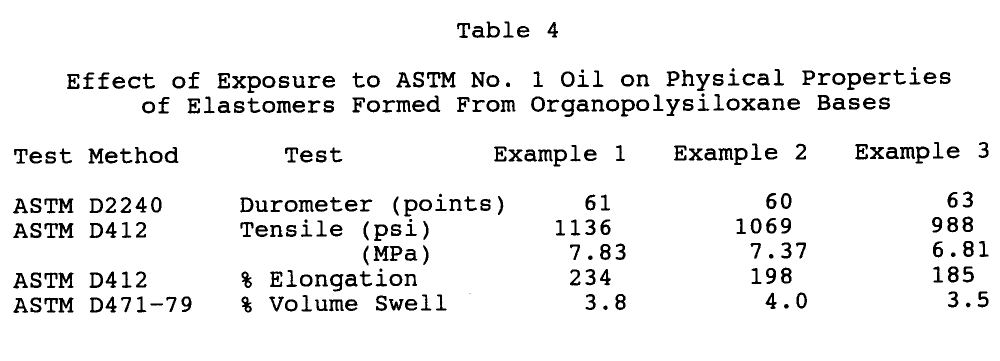

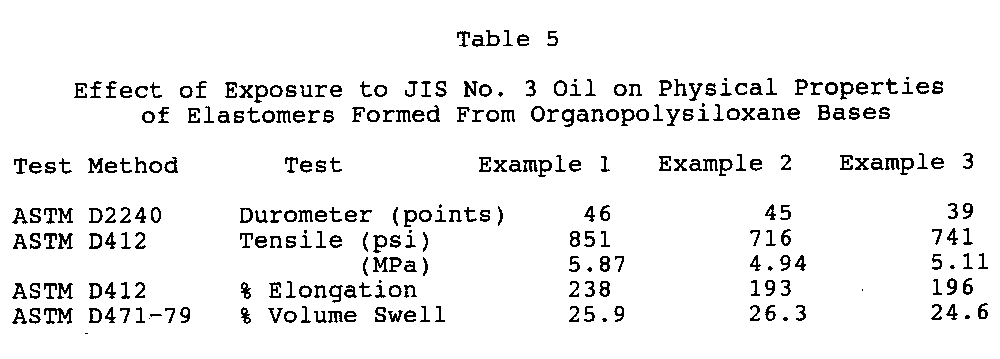

## Claims

1. A method for preparing an organopolysiloxane base comprising forming a mixture comprising
(i) 100 parts by weight of a vinyldiorganosiloxy end-terminated polysiloxane fluid having a viscosity within a range of 30 mPa·s to 1,000 mPa·s at 25°C.,
(ii) 80 parts to 120 parts by weight of ground quartz having an average particle size within a range of 1 to 20 micrometers,
(iii) up to 50 parts by weight of silica,
(iv) 5 to 20 parts of disilazane, and
(v) 1 to 10 parts water;
where components (i) through (v) are mixed at a temperature of 60°C. or below for a period of time sufficient to effect essentially a homogeneous blend.

2. A method according to claim 1 where the mixture comprises 30 parts to 40 parts by weight of fumed silica per 100 parts by weight of the vinyldiorganosiloxy end-terminated polysiloxane fluid and the fumed silica has a surface area within a range of 300 m/g to 500 m/g.

3. A method according to claim 1 where the disilazane is described by formula (R¹₃Si)₂NH, where each R¹ is independently selected from monovalent hydrocarbon radicals comprising 1 to 7 carbon atoms.

4. A method according to claim 1 where the mixture comprises 7 to 15 parts by weight of disilazane per 100 parts by weight of the vinyldiorganosiloxy end-terminated polysiloxane fluid and the disilazane is hexamethyldisilazane.

5. A method according to claim 1 where the mixture comprises 2 to 7 parts by weight of water per 100 parts by weight of the vinyldiorganosiloxy end-terminated polysiloxane fluid.

6. A method according to claim 1 where the mixture further comprises:
(vi) 0.05 parts to 5 parts by weight of a hydroxydiorganosiloxy end-terminated vinylorganosiloxane described by formula HO{(SiR₂O)ₓ(SiRViO)_{y}}H where each R is an independently selected non-alkenyl monovalent hydrocarbon radical comprising 1 to 7 carbon atoms, Vi is vinyl, x+y=6 to 20 and y ≧2.

7. A method according to claim 6 where the hydroxydiorganosiloxy end-terminated vinylorganosiloxane comprises 1 to 5 parts by weight per 100 parts by weight of the vinyldiorganosiloxy end-terminated polysiloxane fluid and R is methyl.

8. A method according to claim 1 where a mixture comprising (A)(i), (A)(v), and optionally (A)(vi), is formed; (A)(iv) is added to the mixture and blended in; (A)(ii) is then added to the mixture and blended in; and then (A)(iii) is added to the mixture and blended in thereby forming the organopolysiloxane base.

9. A method according to claim 8 where the organopolysiloxane base is heated at a temperature with a range of 140°C. to 160°C. to effect removal of volatiles from the base.

10. A liquid silicon rubber composition comprising:
(A) the organopolysiloxane base of claims 1 or 6;
(B) an organohydrogensiloxane crosslinker containing an average of at least two silicon-bonded hydrogen atoms per molecule, the amounts of components (B) and (i) being sufficient to provide a ratio of the number of silicon-bonded hydrogen atoms of component (B) to the number of vinyl substituents of component (i) within a range of 1:10 to 10:1, and
(C) a platinum group metal-containing catalyst, the amount of catalyst being sufficient to accelerate a curing reaction between the vinyl substituents of component (i) and the silicon-bonded hydrogen atoms of component (B) and comprising 1 to 10,000 parts of platinum metal per one-million parts of component (i).

11. A composition according to claim 10 further comprising (D) an inhibitor in an amount sufficient to retard the curing reaction at room temperature but insufficient to prevent the curing reaction at elevated temperature.
